# EUROPÄISCHE PATENTANMELDUNG

(11) **EP 0 698 523 A2**
(43) Veröffentlichungstag der Anmeldung: **28.02.1996**
(21) Anmeldenummer: 95107536.5
(22) Anmeldetag: 18.05.1995
(51) Int. Cl.: B60N 2/20

(54) **Kraftfahrzeugsitz mit schwenkbar an einem Adapter befestigter Rückenlehne**

(30) Priorität: 25.07.1994 DE 4426057
(71) Anmelder: P.A. RENTROP, HUBBERT & WAGNER FAHRZEUGAUSSTATTUNGEN GMBH & CO. KG, D-31655 Stadthagen (DE)
(72) Erfinder: Falk, Dietmar, D-31655 Stadthagen (DE)
(74) Vertreter: Patentanwälte Dipl.-Ing. Bodo Thielking Dipl.-Ing. Otto Elbertzhagen

(57) **Zusammenfassung**

Bei einem Kraftfahrzeugsitz mit schwenkbar an einem Adapter (3) befestigter Rückenlehne (2), bei dem der Adapter (3) um eine sitzfeste Drehachse (4) verschwenkbar ist, ist eine rückblockierende Sitzlängsverstellung mit Führungsschiene (14) und Rastöffnungen sowie einem damit zusammenwirkenden Verriegelungselement (22) vorgesehen. Parallel zu der Führungsschiene (14) ist ein kammartiges Element (15) vorgesehen, das ebenfalls Rastausnehmungen (15a) aufweist und das gemeinsam mit dem Sitz und der Führungsschiene (14) in Längsrichtung verfährt. Dieses kammartige Element (15) wird beim Entriegeln der Rückenlehne (2) aufwärts gegen einen karosseriefesten Gegenbereich verschoben und dient bei der Schwenkbewegung der Rückenlehne nach vorn als Element zum Festhalten der Ausgangsposition in Sitzlängsrichtung. Beim Verschwenken der Rückenlehne (2) wird der Sitz dadurch gleichzeitig zur Vergrößerung des Fußraums nach vorn verfahren und beim Rückverschwenken erreicht der Sitz wieder seine ursprüngliche Ausgangslage.

## Beschreibung

Die Erfindung betrifft einen Kraftfahrzeugsitz mit schwenkbar an einem Adapter befestigter Rückenlehne, bei dem der Adapter um eine sitzfeste Drehachse verschwenkbar ist und der Sitz eine Führungsschiene zur Sitzlängsverstellung aufweist, die in Sitzlängsrichtung mit Abstand angeordnete Ausnehmungen aufweist, in die ein quer zur Längserstreckung der Führungsschiene gegen die Kraft einer Rückstellfeder bewegliches Verriegelungselement für ein Blockieren der fest mit dem Sitz verbundenen Führungsschiene in gewählten Längspositionen einsetzbar ausgebildet ist, wobei ein Verschwenken der Rückenlehne zu einer Längsverschiebung des Sitzes führt.

Derartige Kraftfahrzeugsitze sind als Vordersitze für zweitürige Fahrzeuge üblich. Zum Einstieg auf die rückwärtigen Sitze wird die Rückenlehne entriegelt. Dabei ist es auch bekannt, mit der Verriegelung der Rückenlehne gleichzeitig die Verriegelung des Sitzes aufzuheben mit der Folge, daß der Sitz gemeinsam mit der verschwenkten Rückenlehne nach vorne verschoben werden kann, so daß sich ein vergrößerter Einstieg ergibt. Bei derartigen Konstruktionen muß nach dem Verschwenken der Rückenlehne in ihre verriegelte Neigungsstellung die Sitzposition jeweils wieder neu gesucht werden.

Ausgehend von diesem Stand der Technik liegt der Erfindung die Aufgabe zugrunde, einen Kraftfahrzeugsitz der als bekannt vorausgesetzten Art so auszubilden, daß er beim Verschwenken der Rückenlehne nach vorne zum Einstieg auf die hinteren Sitze aus der Ausgangsposition nach vorn verfahren wird und nach dem Zurückschwenken der Rückenlehne in deren verriegelte Neigungsposition wieder seine Ausgangsposition einnimmt.

Die Lösung dieser Aufgabe erfolgt dadurch, daß an einem Bereich des Adapters oder an einem damit verbundenen Bereich ein Übertragungsglied angreift, das mit einem Ende eines zur Führungsschiene parallel verlaufenden, kammartigen Elements verbunden ist, das einseitig offene Rastausnehmungen aufweist, die zum Eingriff mit einem karosseriefesten Gegenelement ausgebildet sind und den gleichen Abstand wie die Ausnehmungen der Führungsschiene aufweisen, wobei das kammartige Element zwischen einer unteren, das Verriegelungselement freigebenden und einer oberen, durch das Verriegelungselement gegen Längsverschiebung blockierten Höhenlage verschiebbar und über ein Zugelement entriegelbar ist.

Ein derartiger Kraftfahrzeugsitz bietet einen hohen Bedienungskomfort, weil er sicherstellt, daß nach dem Verschwenken der Rückenlehne die Ausgangsposition des Sitzes nicht neu eingestellt werden muß.

Bevorzugte Ausgestaltungen der Erfindung ergeben sich aus den Unteransprüchen.

Nachstehend wird eine bevorzugte Ausführungsform der Erfindung anhand der Zeichnung im einzelnen beschrieben. Es zeigen:
- Figur 1: - eine Seitenansicht der maßgeblichen, funktionswesentlichen Bestandteile des Kraftfahrzeugsitzes, soweit sie im Zusammenhang mit der Erfindung von Bedeutung sind,
- Figur 2: - eine zu Figur 1 analoge schematische Darstellung bei nach hinten verschwenkter Rückenlehne und nach hinten verfahrener Ausgangsposition des Sitzes,
- Figur 3: - eine zu Figur 2 analoge Darstellung bei am weitesten nach vorn verfahrenem Sitz,
- Figur 4: - eine teilweise geschnittene Seitenansicht der Verriegelungseinrichtung für die Längsverstellung im entriegelten Zustand,
- Figur 5: - die Darstellung gemäß Figur 4 im verriegelten Zustand.

Von der Rückenlehne, die insgesamt mit 2 bezeichnet ist, sind lediglich ein seitlicher Lehnenholm 1 und ein Adapter 3 gezeigt. Zwischen dem Lehnenholm 1 und dem Adapter 3 ist eine hier nicht weiter interessante Neigungsverstellvorrichtung vorgesehen. An dem Adapter 3 ist schwenkbar um eine Achse 7a eine Verriegelungsklinke 7 angelenkt. Diese Verriegelungsklinke 7 übergreift im verriegelten Zustand der Rückenlehne einen sitzfesten Verriegelungsbolzen 6. Die Verriegelungsklinke 7 ist über eine Zugfeder mit einer Blockierklinke 8 verbunden, die um eine Achse 8a am Adapter 3 schwenkbar angelenkt ist.

Der Adapter 3 ist um eine sitzfeste vordere Achse 4 verschwenkbar. Er besitzt einen damit starr verbundenen Bereich 5, der gemeinsam mit dem Adapter 3 um die Achse 4 verschwenkt.

Am unteren Ende des Bereichs 5 ist zwischen zwei auf unterschiedlichen Seiten des Sitzes vorgesehenen Bereichen ein Rohr 29 verschwenkbar gelagert, an dem eine Lasche 17 drehfest angesetzt ist. Die Lasche 17 ist ihrerseits gelenkig mit einem kammartigen Element 15 verbunden, das nach oben offene Ausnehmungen 15a aufweist. Das kammartige Element 15 erstreckt sich parallel zu der Führungsschiene 14, die fest mit dem Sitz verbunden ist. Die Führungsschiene 14 besitzt in Sitzlängsrichtung mit Abstand angeordnete Ausnehmungen 14a. Der Abstand der Ausnehmungen 14a entspricht dem Abstand der nach oben offenen Rastausnehmungen 15a des kammartigen Elements 15.

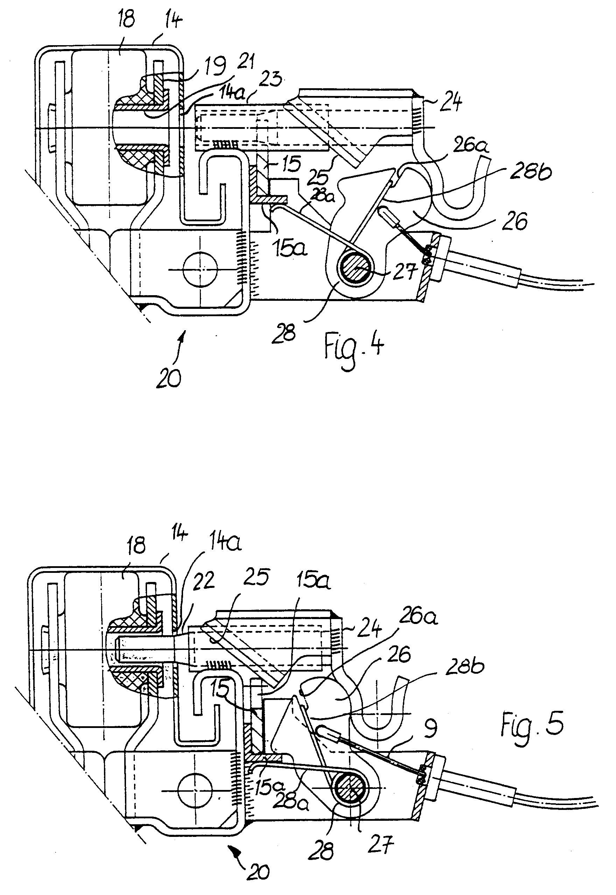

In Figuren 4 und 5 ist die Arretiermechanik genauer sichtbar:
Die Führungsschiene 14 läuft auf ortsfest gelagerten Rollen 18, die zwischen zwei Flanschen eines karosseriefesten Bocks gelagert sind. Die Rolle 18 ist über eine Hülse 21 in den Flanschen 19 des ortsfesten Bocks 20 gelagert.

An dem ortsfesten Bock 20 befindet sich die doppelt wirkende Verriegelungseinrichtung:

Ein Verriegelungszapfen 22 greift im Verriegelungszustand durch eine Ausnehmung 14a der Führungsschiene 14 in die Hülse 21 ein. Der Verriegelungszapfen 22 ist an seinem rückwärtigen Ende mit einem Flansch 24 verschweißt, an dem eine obere Deckplatte sitzt sowie zwei seitliche, geneigte Flansche 25. Der Verriegelungsbolzen 22 ist in einer ortsfesten Hülse 23 geführt. Zum Entriegeln des Verriegelungsbolzens 22 wird über eine Bowdenzugseele 9 eine Betätigungsklinke aus der Position gemäß Figur 5 in die Position gemäß Figur 4 gezogen. Dabei nimmt die Betätigungsklinke 26 über den Flansch 24 den Verriegelungsbolzen 22 so weit mit, daß er außer Eingriff mit den Ausnehmungen 14a kommt. Die Betätigungsklinke 26 ist schwenkbar um eine parallel zur Sitzlängsachse sich erstreckende Achse 27, die durch einen Zapfen gebildet ist. Der Zapfen umschließt die Windungen einer Doppelschenkelfeder 28. Deren zentrales Schenkelpaar 28b liegt von zwei unterschiedlichen Seiten her an der Betätigungsklinke 26 an, und zwar in einer Ausnehmung 26a.

Die jeweils äußeren Schenkel 28a liegen an der Unterseite eines in Sitzlängsrichtung sich erstreckenden Winkels 15a an, der höhenverstellbar geführt ist. Auf dem Winkel 15a liegt das kammartige Element 15 auf, das in gleichem Abstand wie die Ausnehmungen 14a der Führungsschiene 14 angeordnete, nach oben offene Rastausnehmungen 15a besitzt. In der entriegelten Position gemäß Figur 4 heben die Schenkel 28a der Schenkelfeder 28 den Winkel 15a zusammen mit dem kammartigen Element 15 so weit nach oben an, daß der Grund der Ausnehmung 15a gegen die Unterseite der Hülse 23 anliegt. Im verriegelten Zustand wird der Winkel 15a von einer Nase der Betätigungsklinke 26 nach unten gedrückt. In dieser Position ist auch das kammartige Element 15 nach unten verschoben, und zwar so weit, daß sich die Unterseite der ortsfest angeordneten Hülse 23 oberhalb der Oberkante des kammartigen Elements befindet.

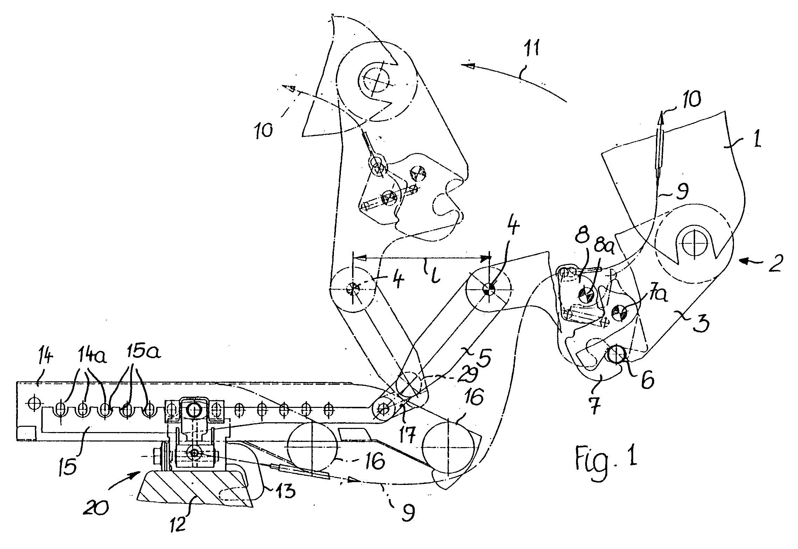

In Figur 1 ist ersichtlich, daß der Lagerbock 20 in bekannter Weise mittels eines üblichen Verriegelungszapfens 13 an einem karosseriefesten Bereich 12 festgelegt ist.

Zum Entriegeln wird die Seele 9 des Bowdenzugs gemäß Figur 1 in Richtung des Pfeils 10 aufwärts gezogen. Da die Bowdenzugseele 9 an der Blockierklinke 8 angreift, wird diese im Uhrzeigersinn verschwenkt. Dabei wird die Verriegelungsklinke 7 zum Freigeben des Verriegelungsbolzens 6 ebenfalls verschwenkt. Die entsprechenden Verschwenkpositionen sind in Figur 1 strichpunktiert dargestellt. Durch den Zug in Richtung des Pfeils 10 an der Bowdenzugseele 9 wird auch die Betätigungsklinke gemäß Figuren 4 und 5 im Uhrzeigersinn nach rechts verschwenkt. Es taucht der Verriegelungsbolzen 22 aus der Ausnehmung 14a aus und es wird von dem Schenkel 28a der Schenkelfeder 28 der Winkel 15a zusammen mit dem kammartigen Element 15 so weit nach oben verschoben, daß das kammartige Element gemäß Figur 4 an der Unterseite der Hülse 23 anliegt und in Längsrichtung unverschieblich blockiert wird. Ein jetzt in Richtung des Pfeils 10 erfolgendes Verschwenken der Rückenlehne 2 aus der durchgehend gezeichneten Position in die strichpunktierte Position führt dazu, daß die Schwenkachse 4 um den Betrag 1 (vgl. Figur 1) nach vorn verschwenkt wird. Der Fußraum wird also um den Betrag 1 bei der geschilderten Verschwenkbewegung der Rückenlehne 2 vergrößert.

Bei einer anschließenden Verschwenkung in Gegenrichtung zum Pfeil 11 bis zum Hintergreifen des Verriegelungsbolzens 6 durch die Verriegelungsklinke 7 hat zur Folge, daß die Bowdenzugseele 9 im Gegenuhrzeigersinn zurückverschwenkt wird und daß der Verriegelungszapfen unter dem Einfluß einer nicht dargestellten Rückstellfeder wieder in seine ursprüngliche Rastausnehmung einfällt. Dabei drückt der schräge Flansch 25, der sich gemeinsam mit dem Verriegelungsbolzen 22 gemäß Figuren 4 und 5 nach links bewegt, das kammartige Element 15 zusammen mit dem Winkel 15a nach unten in die in Figur 5 dargestellte Position.

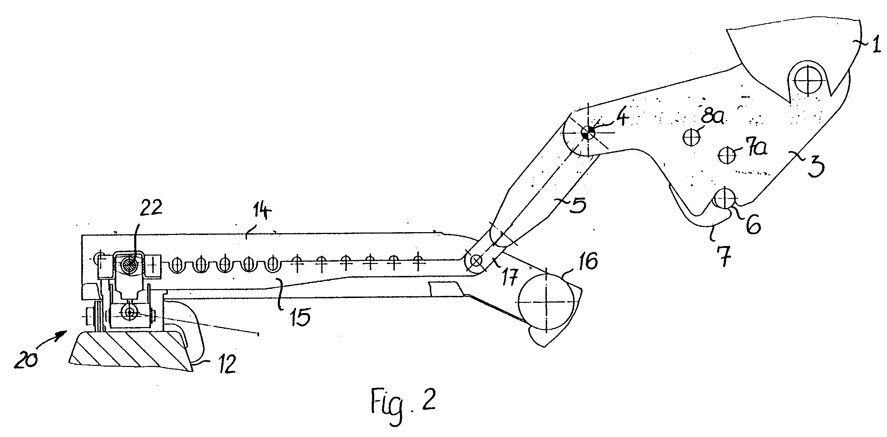

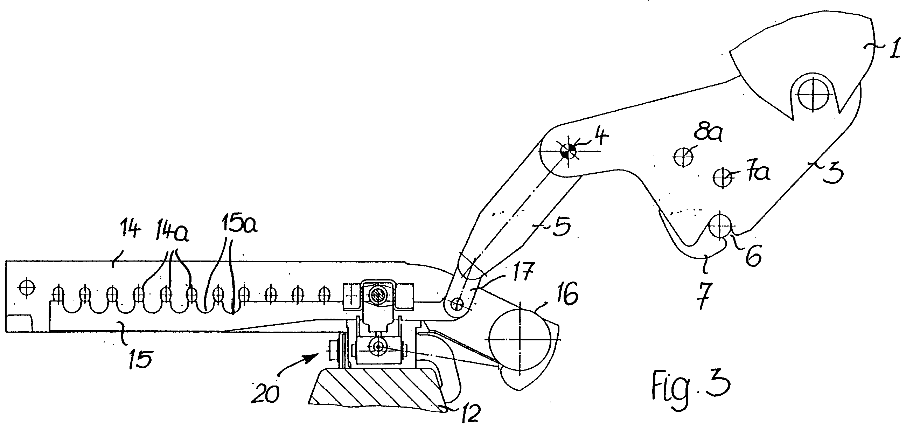

Die im Zusammenhang mit Figur 1 dargestellte Wirkung des Mechanismus ist gleich bei einer weit nach hinten verschobenen Ausgangsposition des Sitzes, wie sie in Figur 2 dargestellt ist. Bei der in Figur 3 dargestellten, am weitesten nach vorne verfahrenen Ausgangsposition ergibt sich beim Verschwenken der Rückenlehne nach vorne keine weitere Verschiebung des Sitzes über dessen Ausgangsposition hinaus. Das kammartige Element 15 hat in seinem hinteren Bereich keine nach oben weisenden Ausnehmungen mehr, die mit der Unterseite der Hülse 23 zur Erzeugung einer Arretierwirkung zusammenwirken könnten. Vielmehr ist im hinteren Bereich des kammartigen Elements 15 dessen Oberkante glatt ausgebildet. Bei einem Verschwenken der Rückenlehne führt diese Ausbildung dazu, daß das kammartige Element mit seiner glatten Oberkante an der Unterseite der Hülse anliegt und beim Verschwenken der Rückenlehne frei in Sitzlängsrichtung beweglich ist.

Bei einer Ausführung mit Höhenverstellung des Sitzes, die nicht dargestellt ist, erfolgt die Kopplung zwischen dem um die Achse 4 schwenkbar gelagerten Adapter 3 und dem kammartigen Element 15 nicht mit Hilfe der beschriebenen starr aber schwenkbeweglich ausgebildeten Mechanik, sondern in einfacher Weise mittels des Bowdenzugs, der einerseits am Adapter 3 und andererseits am kammartigen Element 15 angesetzt ist.

Die Einbindung der Blockierklinke 8 in den Zugweg der Bowdenzugseele 9 hat zur Folge, daß die Entriegelung für das nach vorne erfolgende Verschwenken während des gesamten Verschwenkwegs aufrechterhalten wird, ohne daß hierzu die Bowdenzugseele 9 ständig in Richtung des Pfeils 10 gehalten werden müßte. Die Verriegelungsstellung wird jeweils automatisch wieder erreicht, wenn die Verriegelungsklinke 7 im Verriegelungszustand der Rückenlehne 1 den Verriegelungsbolzen 6 umgreift.

## Patentansprüche

1. Kraftfahrzeugsitz mit schwenkbar an einem Adapter (3) befestigter Rückenlehne (2), bei dem der Adapter (3) um eine sitzfeste Drehachse (4) verschwenkbar ist und der Sitz eine Führungsschiene (14) zur Sitzlängsverstellung aufweist, die in Sitzlängsrichtung mit Abstand angeordnete Ausnehmungen (14a) aufweist, in die ein quer zur Längserstreckung der Führungsschiene (14) gegen die Kraft einer Rückstellfeder bewegliches Verriegelungselement (22) für ein Blockieren der fest mit dem Sitz verbundenen Führungsschiene (14) in gewählten Längspositionen einsetzbar ausgebildet ist, wobei ein Verschwenken der Rückenlehne zu einer Längsverschiebung des Sitzes führt,
dadurch gekennzeichnet,
daß an einem Bereich des Adapters (3) oder einem damit verbundenen Bereich (5) ein Übertragungsglied (17) angreift, das mit einen Ende eines zur Führungsschiene (14) parallel verlaufenden kammartigen Elements (15) verbunden ist, das einseitig offene Rastausnehmungen (15a) aufweist, die zum Eingriff mit einem karosseriefesten Gegenelement ausgebildet sind und den gleichem Abstand wie die Ausnehmungen (14a) der Führungsschiene (14) aufweisen, wobei das kammartige Element (15) zwischen einer unteren, das Verriegelungselement (22) freigebenden und einer oberen, durch das Verriegelungselement (22) gegen Längsverschiebung blockierten Höhenlage verschiebbar und über ein das Verriegelungselement (22) betätigendes Zugelement (9, 26) entriegelbar ist.

2. Kraftfahrzeugsitz nach Anspruch 1,
dadurch gekennzeichnet,
daß das das Verriegelungselement (22) betätigende Zugelement (9) befestigt ist an einer Blockierklinke (8), welche schwenkbar am Adapter (3) gelagert ist und mit einer ebenfalls am Adapter schwenkbar gelagerten Verriegelungsklinke (7) zusammenwirkt, welche im verriegelten Zustand der Rückenlehne (2) einen am Sitz festen Verriegelungsbolzen (6) hintergreift und für ein Verschwenken der Rückenlehne (2) nach vorne Verriegelungsbolzen (6) freigibt.

3. Kraftfahrzeugsitz nach Anspruch 1 oder 2,
dadurch gekennzeichnet,
daß das Übertragungsglied gebildet wird von einem Bowdenzug, der die Schwenkbewegung des Adapters (3) in einer Längsbewegung des kammartigen Elements (15) überführt.

4. Kraftfahrzeugsitz nach Anspruch 1 oder 2,
dadurch gekennzeichnet,
daß das Übertragungsglied gebildet wird von einem Rohr (29), das drehbar gelagert ist zwischen zwei zu beiden Seiten des Sitzes vorgesehenen, mit den Adaptern (3) verbundenen Bereichen (5), wobei mit dem Rohr (29) eine Lasche (17) drehfest verbunden ist, die an dem hinteren Ende des kammartigen Elements (15) angelenkt ist.

5. Kraftfahrzeugsitz nach einem oder mehreren der Ansprüche 1 bis 4,
dadurch gekennzeichnet,
daß das Verriegelungselement (22) ein Verriegelungszapfen ist, der mit einem Flansch (24) verbunden ist, an dem eine von dem Zugelement (9) betätigte, schwenkbare Klinke (26) angreift.

6. Kraftfahrzeugsitz nach Anspruch 5,
dadurch gekennzeichnet,
daß mit dem Verriegelungszapfen eine nach unten gerichtete Anlagefläche (25) verbunden ist, die für ein nach unten gegen die Kraft einer Feder (28) erfolgendes Drücken des kammartigen Elements (15) ausgebildet ist.

7. Kraftfahrzeugsitz nach einem oder mehreren der Ansprüche 1 bis 6,
dadurch gekennzeichnet,
daß an dem kammartigen Element (15) eine dieses nach oben anhebende Feder (28) angreift.

8. Kraftfahrzeugsitz nach einem oder mehreren der Ansprüche 1 bis 7,
dadurch gekennzeichnet,
daß die Feder (28) eine Schenkelfeder ist, deren Schenkel (28a) gegebenenfalls mittelbar an der Unterseite des kammartigen Elements (15; 15a) anliegt und deren anderer Schenkel (28b) in einer Ausnehmung (26a) der Betätigungsklinke (26) liegt, welche um eine in Sitzlängsrichtung verlaufende Achse verschwenkbar ist, wobei die Schenkelfeder um einen in Sitzlängsrichtung verlaufenden Bolzen (27) herumgeführt ist.

9. Kraftfahrzeugsitz nach einem oder mehreren der Ansprüche 1 bis 8,
dadurch gekennzeichnet,
daß die Feder (28) eine Doppelschenkelfeder ist, deren äußeres Schenkelpaar am kammartigen Element (15) und deren zentrales Schenkelpaar an der Betätigungsklinke (26) anliegt.

10. Kraftfahrzeugsitz nach einem oder mehreren der Ansprüche 1 bis 9,
dadurch gekennzeichnet,
daß das kammartige Element (15) lose auf der Oberseite eines höhenverschieblich geführten Winkels (15a) aufliegt, an dessen Unterseite eines horizontalen Schenkels der eine Schenkel (28a) der Feder (28) anliegt.

11. Kraftfahrzeugsitz nach einem oder mehreren der Ansprüche 1 bis 10,
dadurch gekennzeichnet,
daß die Betätigungsklinke (26) im Verriegelungszustand den Winkel (15a) in seiner unteren Position hält.
